# EUROPÄISCHE PATENTSCHRIFT

(11) **EP 0 696 975 B1**
(45) Veröffentlichungstag und Bekanntmachung des Hinweises auf die Patenterteilung: **05.02.1997**
(21) Anmeldenummer: 94916225.9
(22) Anmeldetag: 10.05.1994
(51) Int. Cl.: B62D 5/083

(54) **DREHSCHIEBERVENTIL FÜR HILFSKRAFTLENKUNGEN VON KRAFTFAHRZEUGEN**
SLIDING VANE ROTATY VALVE FOR ASSISTED STEERING SYSTEMS OF MOTOR VEHICLES
SOUPAPE A TIROIR ROTATIF POUR DIRECTIONS ASSISTEES D'AUTOMOBILES

(30) Priorität: 13.05.1993 DE 4316005
(43) Veröffentlichungstag der Anmeldung: 21.02.1996
(73) Patentinhaber: ZF FRIEDRICHSHAFEN Aktiengesellschaft, 88038 Friedrichshafen (DE)
(72) Erfinder: SCHURR, Rudolf, D-73431 Aalen (DE); BREU, Günther, D-73574 Iggingen (DE)
(86) Internationale Anmeldenummer: EP9401510
(87) Internationale Veröffentlichungsnummer: WO9426574

(56) Entgegenhaltungen:
- WO-A-84/02889
- FR-A- 2 495 703

## Beschreibung

Die Erfindung betrifft ein Drehschieberventil für Hilfskraftlenkungen von Kraftfahrzeugen nach dem Oberbegriff des Anspruches 1. Das Drehschieberventil enthält zwei Ventilelemente - nämlich einen Drehschieber und eine Ventilbüchse -, die koaxial ineinander beweglich angeordnet sind und über einen Torsionsstab und eine Totgangkupplung derart miteinander verbunden sind, daß sie maximal um den Verdrehweg der Totgangkupplung relativ zueinander verdrehbar sind. Das eine Ventilelement ist mit einem Ventil-Eingangsglied, das andere Ventilelement ist mit einem Ventil-Ausgangsglied drehfest verbunden. Ein Teil der Totgangkupplung ist an dem radial inneren Ventilelement durch Klauen gebildet, die gegenüber der Stirnseite des Ventilelementes vorstehen.

Ein derartiges Drehschieberventil ist beispielsweise bekannt aus der DE-OS 17 55 438. Für den Fall, daß der Torsionsstab brechen oder die hydraulische Anlage versagen sollte, sind bei diesem Drehschieberventil das innere und das äußere Ventilelement mit Anschlägen bzw. Klauen versehen. Diese Anschläge und Klauen kommen dann zur Wirkung, wenn einer der genannten Fehler auftritt. In einem solchen Fall kann das Lenkgetriebe von Hand weiterbetätigt werden.

Bei normalen Lenkbewegungen begrenzen die Anschläge und Klauen, die zusammen eine Totgangkupplung bilden, den Steuerweg des Drehschieberventils, so daß eine Übersteuerung nicht möglich ist. Außerdem wird die Bewegung des Torsionsstabes auf seinen Proportionalbereich begrenzt.

Bei der in der DE-OS 17 55 438 vorgeschlagenen Anordnung sind jedoch die Klauen, die mit den Anschlägen des äußeren Ventilelements zusammenwirken, etwa in der Mitte des inneren Ventilelementes, das den Drehschieber bildet, angeordnet. Ein Bauteil mit derart angeordneten, radial vorspringenden Klauen läßt sich jedoch nur mit einem erheblichen Material- und Fertigungsaufwand herstellen.

Bei einem anderen bekannten, und alle im Oberbegriff des Anspruchs 1 definierten Merkmale aufweisenden Drehschieberventil (DE-C2-33 03 063) stehen die Klauen an dem Drehschieber in axialer Richtung gegenüber seiner Stirnfläche vor. Solche Klauen können relativ einfach hergestellt werden. Schwieriger lassen sich dagegen die mit parallelen Seitenwänden versehenen Durchbrüche des äußeren Ventilelementes herstellen. Hierfür sind relativ teure Räumwerkzeuge erforderlich.

Bei diesem Drehschieberventil besteht außerdem durch die geräumten Ausnehmungen des äußeren Ventilelementes eine offene Verbindung von dessen Innenraum zu der äußeren Umgebung. Die Anwendung eines derartigen Drehschieberventils ist deshalb auf Konstruktionen beschränkt, bei denen innerhalb und außerhalb des äußeren Ventilelementes an dieser Stelle gleicher Druck herrscht und somit keinerlei Verbindung zu unterschiedlichen Zylinderräumen bestehen darf. Wäre dies nämlich der Fall, so müßte die geräumte Ausnehmung von beiden Seiten mit großem Aufwand geschlossen und abgedichtet werden.

Der Erfindung liegt die Aufgabe zugrunde, ein Drehschieberventil derart auszugestalten, daß die Nachteile der bekannten Ausführungen vermieden werden. Insbesondere soll die Totgangkupplung mit einfachen Mitteln hergestellt werden können. Das Drehschieberventil soll ohne zusätzlichen Aufwand, insbesondere in Hinsicht auf zusätzliche Abdichtungsmaßnahmen, vielseitig verwendet werden können.

Diese Aufgabe wird durch das im Anspruch 1 gekennzeichnete Drehschieberventil gelöst. Weitere vorteilhafte und zweckmäßige Ausgestaltungen der Erfindung sind in den Unteransprüchen angegeben. Die Lösung besteht insbesondere darin, daß der andere Teil der Totgangkupplung durch zwei parallel zueinander in dem radial äußeren Ventilelemente angeordnete Stifte gebildet ist, deren Achsen in einer senkrecht zur Achse des Drehschieberventils stehenden Ebene liegen Die Bohrungen für die Stifte können besonders einfach hergestellt werden, wenn die Achsen der Stifte symmetrisch zueinander in bezug auf die Achse des Drehschieberventils liegen. Die Stifte können dann auch automatisch montiert werden. Durch entsprechende Auswahl der Passungen zwischen Stiften und Bohrungen können die Stifte auf einfache Weise in dem äußeren Ventilelement öldicht eingepreßt werden. Dadurch ergibt sich der Vorteil, daß die eingepreßten Stifte sowohl zur Steuerwegbegrenzung (Totgangkupplung) als auch zur Abdichtung zwischen dem Innenraum und der Außenseite des äußeren Ventilelementes dienen. Eine zusätzliche Abdichtung wird nicht notwendig. Somit können die Ventilinnen- und -außenbereiche unterschiedlichen Druckräumen zugeordnet werden. Da die Stifte an ihrer Außenseite jeweils mit dem gleichen Druck beaufschlagt sind, ist keine zusätzliche Sicherung gegen Verschieben erforderlich. Wird der Abstand der Achse jedes Stiftes zu der benachbarten Wandung der zentralen Bohrung des äußeren Ventilelementes kleiner gewählt als der halbe Durchmesser des Stiftes, so können sich die Stifte auf ihrer ganzen Länge wenigstens auf einer Seite in Richtung der Beanspruchung abstützen. Die Stifte werden dadurch nicht auf Biegung beansprucht.

In einer besonders günstigen Ausbildungsform ist das äußere Ventilelement einstückig mit dem Ventil-Ausgangsglied ausgebildet. In diesem Fall ist das äußere Ventilelement die Steuerbüchse des Drehschieberventils. Das Ventil-Ausgangsglied kann je nach Art der Lenkung ein Antriebsritzel oder eine Kugelgewindespindel sein.

Im folgenden wird die Erfindung anhand eines in der Zeichnung dargestellten Ausführungsbeispieles näher erläutert.
Es zeigt:

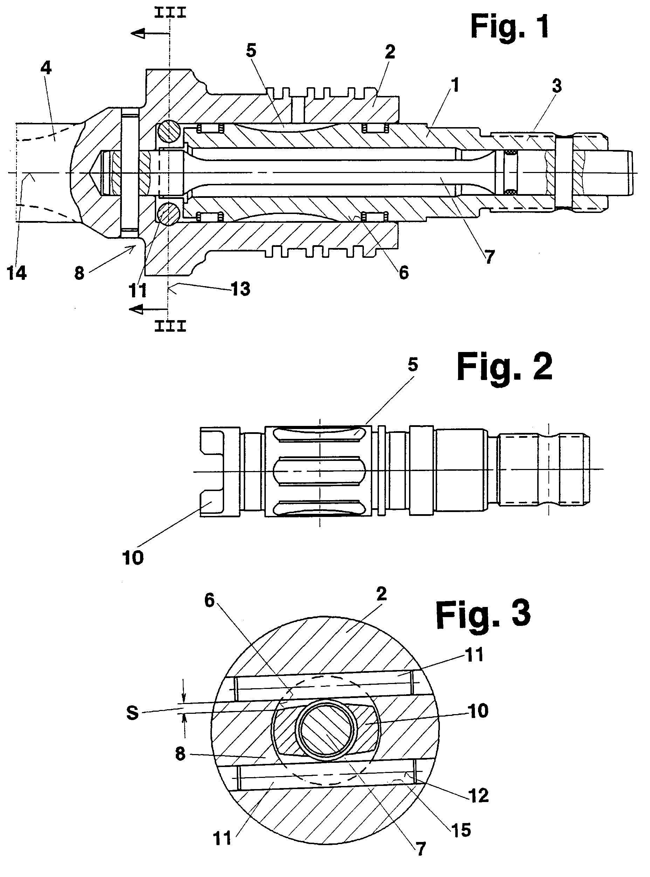

- Fig. 1: einen Längsschnitt durch das erfindungsgemäße Drehschieberventil;
- Fig. 2: einen Drehschieber in Ansicht und
- Fig. 3: den Querschnitt durch das Drehschieberventil gemäß der Linie III-III in Fig. 1 in vergrößertem Maßstab.

Das erfindungsgemäße Drehschieberventil weist zwei Ventilelemente auf, nämlich ein inneres Ventilelement 1 in der Form eines Drehschiebers und ein äußeres Ventilelement 2 in der Form einer Ventilbüchse. Das innere Ventilelement 1 ist mit einem Ventil-Eingangsglied 3 drehfest verbunden, das äußere Ventilelement 2 mit einem Ventil-Ausgangsglied 4. Das Ventil-Ausgangsglied 4 kann als Ritzel oder als Kugelgewindespindel ausgebildet sein, je nachdem, ob das Drehschieberventil für Zahnstangen- oder Kugelmutterlenkungen verwendet werden soll. An der äußeren Mantelfläche des inneren Ventilelementes 1 sind Steuer-Längsnuten 5 angeordnet, die in bekannter Weise mit nicht dargestellten Steuer-Längsnuten zusammenwirken, die in einer Axialbohrung 6 des äußeren Ventilelementes 2 angeordnet sind.

Die beiden Ventilelemente 1 und 2 sind über einen Torsionsstab 7 und eine Totgangkupplung 8 derart miteinander verbunden, daß sie maximal um den Verdrehweg der Totgangkupplung 8 relativ zueinander verdrehbar sind. Ein Teil der Totgangkupplung 8 ist an dem inneren Ventilelement 1 in der Form von Klauen 10 angeordnet. Die Klauen 10 stehen gegenüber der Stirnseite des inneren Ventilelementes 1 in axialer Richtung vor.

Der andere Teil der Totgangkupplung 8 ist gebildet durch zwei Stifte 11, die in dem äußeren Ventilelement 2 befestigt sind. Die beiden Stifte 11 sind parallel zueinander angeordnet. Ihre Achsen 12 liegen in einer Ebene 13, die senkrecht steht zu der Achse 14 des Drehschieberventils. Die Achsen 12 der Stifte 11 liegen symmetrisch zueinander in bezug auf die Achse 14 des Drehschieberventils.

Die Stifte 11 sind in Bohrungen 15 des äußeren Ventilelementes 2 eingepreßt. Die Stifte 11 gehen dabei durch die Axialbohrung 6 des äußeren Ventilelementes 2 hindurch. Da die Stifte 11 mit Preßsitz montiert sind, besteht eine öldichte Abdichtung zwischen dem Innenraum der Axialbohrung 6 und der Außenumgebung des äußeren Ventilelementes 2.

Der Abstand der Achse 12 jedes Stiftes 11 zu der benachbarten Wandung der Axialbohrung 6 des äußeren Ventilelementes 2 ist kleiner als der halbe Durchmesser des Stiftes 11. Dadurch wird jeder Stift 11 auch in seinem Mittelbereich an seiner Seite, die in bezug auf die Achse 14 des Drehschieberventils radial außen liegt, an der Wand der Bohrung 15 abgestützt. Er wird dadurch nicht auf Biegung beansprucht. Die Abmessungen und die Zuordnung der Klauen 10 und der Stifte 11 erfolgt derart, daß die Klauen 10 mit einem bestimmten Verdrehspiel S in den Zwischenraum zwischen den beiden Stiften 11 hineinragen. Im Rahmen dieses Verdrehspiels erfolgt die Druckölsteuerung durch das Drehschieberventil in bekannter Weise. Nach Überwindung des Verdrehspiels S liegen die Klauen 10 an den Stiften 11 an. Dadurch ergibt sich auf einfache Art und Weise eine Steuerwegbegrenzung. Durch die an den Stiften 11 anliegenden Klauen 10 erfolgt eine mechanische Mitnahme des äußeren Ventilelementes 2 durch das innere Ventilelement 1, d. h. die Totgangkupplung 8 ist "geschlossen".

In dem bisher beschriebenen Ausführungsbeispiel ist das innere Ventilelement 1 fest mit dem Ventil-Eingangsglied 3 verbunden. Das äußere Ventilelement 2 ist mit dem Ventil-Ausgangsglied 4 einstückig ausgebildet. Die Erfindung kann jedoch mit gleichen Vorteilen auch mit umgekehrt zugeordneten Ventilelementen verwirklicht werden. Dann wäre das äußere Ventilelement mit dem Ventil-Eingangsglied und das innere Ventilelement mit dem Ventil-Ausgangsglied drehfest verbunden.

### Bezugszeichen

- 1: inneres Ventilelement
- 2: äußeres Ventilelement
- 3: Ventil-Eingangsglied
- 4: Ventil-Ausgangsglied
- 5: Steuer-Längsnut
- 6: Axialbohrung
- 7: Torsionsstab
- 8: Totgangkupplung
- 9: -
- 10: Klaue
- 11: Stift
- 12: Achse
- 13: Ebene
- 14: Achse
- 15: Bohrung
- S: Verdrehspiel

## Patentansprüche

1. Drehschieberventil für Hilfskraftlenkungen von Kraftfahrzeugen, mit folgenden Merkmalen:
- zwei Ventilelemente (1, 2) - ein Drehschieber und eine Ventilbüchse - sind koaxial ineinander beweglich angeordnet und über einen Torsionsstab (7) und eine Totgangkupplung (8) derart miteinander verbunden, daß sie maximal um den Verdrehweg der Totgangkupplung (8) relativ zueinander verdrehbar sind;
- das eine Ventilelement (1) ist mit einem Ventil-Eingangsglied (3), das andere Ventilelement (2) ist mit einem Ventil-Ausgangsglied (4) drehfest verbunden;
- ein Teil der Totgangkupplung (8) ist an dem radial inneren Ventilelement (1) durch Klauen (10) gebildet, die gegenüber seiner Stirnseite in axialer Richtung vorstehen,
dadurch **gekennzeichnet,**
- daß der andere Teil der Totgangkupplung (8) durch zwei parallel zueinander in dem radial äußeren Ventilelement (2) angeordnete Stifte (11) gebildet ist, deren Achsen (12) in einer senkrecht zur Achse (14) des Drehschieberventils stehenden Ebene (13) liegen,
- daß die Achsen (12) der Stifte (11) symmetrisch zueinander in bezug auf die Achse (14) des Drehschieberventils liegen und
- daß die Stifte (11) öldicht in dem äußeren Ventilelement (2) eingepreßt sind.

2. Drehschieberventil nach Anspruch 1, dadurch **gekennzeichnet,** daß der Abstand der Achse (12) jedes Stiftes (11) zu der benachbarten Wandung der Axialbohrung (6) des äußeren Ventilelementes (2) kleiner ist als der halbe Durchmesser des Stiftes (11).

3. Drehschieberventil nach einem der Ansprüche 1 und 2, dadurch **gekennzeichnet,** daß das äußere Ventilelement (2) einstückig mit dem Ventil-Ausgangsglied (4) ausgebildet ist.

## Claims

1. Rotary slide valve for power-assisted steering systems of motor vehicles, having the following features:
- two valve elements (1, 2) - a rotary slide and a valve sleeve - are arranged coaxially so as to be movable one inside the other and are connected by a torsion bar (7) and a backlash coupling (8) to one another in such a way that they are rotatable relative to one another at most by the torsional travel of the backlash coupling (8);
- the one valve element (1) is non-rotatably connected to a valve input member (3) and the other valve element (2) is non-rotatably connected to a valve output member (4);
- one part of the backlash coupling (8) is formed on the radially inner valve element (1) by claws (10) which project axially from the end face of said valve element,
characterized in
- that the other part of the backlash coupling (8) is formed by two pins (11), which are disposed parallel to one another in the radially outer valve element (2) and the axes (12) of which lie in a plane (13) perpendicular to the axis (14) of the rotary slide valve,
- that the axes (12) of the pins (11) lie symmetrically to one another in relation to the axis (14) of the rotary slide valve and
- that the pins (11) are pressed in an oil-tight manner in the outer valve element (2).

2. Rotary slide valve according to claim 1, characterized in that the distance of the axis (12) of each pin (11) from the adjacent wall of the axial bore (6) of the outer valve element (2) is less than half the diameter of the pin (11).

3. Rotary slide valve according to one of claims 1 and 2, characterized in that the outer valve element (2) is constructed integrally with the valve output member (4).

## Revendications

1. Vanne à tiroir rotatif pour directions assistées de véhicules à moteur, ayant les caractéristiques suivantes :
- deux éléments de soupape (1, 2) - un tiroir rotatif et un boîtier de soupape - sont montés de façon à être mobiles l'un dans l'autre et une barre de torsion (7) et un embrayage à point mort (8) sont couplés de telle manière qu'ils soient rotatifs l'un respectivement à l'autre au maximum de la course en rotation de l'embrayage à point mort (8);
- l'un des éléments de soupape (1) est lié rigidement à un organe d'entrée de soupape (3), l'autre élément de soupape (2) est lié rigidement à un organe de sortie de soupape (4);
- une partie de l'embrayage à point mort (8) est formé de griffes (10) solidaires de l'élément de soupape intérieur radial, ces griffes s'étendant axialement par rapport à sa face frontale,
**caractérisée en ce que** l'autre partie de l'embrayage à point mort (8) est constituée de deux goupilles (11) parallèles entre elles et disposées dans l'élément de soupape extérieur radial, les axes (12) de ces goupilles étant disposés dans un plan (13) perpendiculaire à l'axe (14) du tiroir rotatif de la soupape.

2. Vanne à tiroir rotatif selon la revendication 1, **caractérisée en ce que** l'écart de l'axe (12) de chaque goupille (11) par rapport à la paroi de l'alésage axial (6) de l'élément de soupape extérieur (2) est inférieur au demi-diamètre de la goupille (11).

3. Vanne à tiroir rotatif selon les revendications 1 et 2, **caractérisée en ce que** l'élément de soupape extérieur (2) est réalisé d'une pièce avec l'organe de sortie de soupape (4).
